# EUROPÄISCHE PATENTSCHRIFT

(11) **EP 3 204 279 B1**
(45) Veröffentlichungstag und Bekanntmachung des Hinweises auf die Patenterteilung: **16.12.2020**
(21) Anmeldenummer: 15781575.4
(22) Anmeldetag: 07.10.2015
(51) Int. Cl.: B62D 15/02, G05D 1/02, B60W 30/06, G05D 1/00, G06K 9/00

(54) **VERFAHREN ZUM BETRIEB EINES AUTOMATISIERT GEFÜHRTEN, FAHRERLOSEN KRAFTFAHRZEUGS UND ÜBERWACHUNGSSYSTEM**
METHOD FOR OPERATING AN AUTOMATICALLY DRIVEN, DRIVERLESS MOTOR VEHICLE AND MONITORING SYSTEM
PROCÉDÉ DE FONCTIONNEMENT D'UN VÉHICULE À MOTEUR SANS CONDUCTEUR, À PILOTAGE AUTOMATIQUE ET SYSTÈME DE SURVEILLANCE

(30) Priorität: 11.10.2014 DE 102014015075
(43) Veröffentlichungstag der Anmeldung: 16.08.2017
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE)
(74) Vertreter: Herbst, Matthias Heinz
(86) Internationale Anmeldenummer: PCT/EP2015/001967
(87) Internationale Veröffentlichungsnummer: WO 2016/055159

(56) Entgegenhaltungen:
- EP-A1- 2 689 650
- US-A1- 2010 013 615
- US-A1- 2014 029 852
- US-B1- 8 639 644

## Beschreibung

Die Erfindung betrifft ein Verfahren zum Betrieb eines automatisiert geführten, fahrerlosen Kraftfahrzeugs, das als Personenkraftwagen ausgebildet ist, wobei durch Umgebungssensoren, umfassend wenigstens eine Kamera, des Kraftfahrzeugs aufgenommene Sensordaten hinsichtlich bei der Trajektorienplanung zu berücksichtigender Objekte ausgewertet werden, welche Objekte über wenigstens einen die zugehörigen Sensordaten auswertenden Klassifikator als Hindernis oder kein Hindernis klassifizierbar sind. Daneben betrifft die Erfindung ein Überwachungssystem mit einem Kraftfahrzeug und einer Mobilkommunikationseinrichtung.

Die Automatisierung des Fahrzeugbetriebs auch für Personenkraftwagen und sonstige im Straßenverkehr eingesetzte Kraftfahrzeuge ist ein zunehmend auftretendes Ausstattungsmerkmal. So sind bereits Fahrerassistenzsysteme bekannt, die den Einparkvorgang für einen Fahrer übernehmen können und dergleichen. In anderen Bereichen wurde vorgeschlagen, beispielsweise in dedizierten Parkumgebungen, insbesondere einem Parkhaus, ein Kraftfahrzeug vollautomatisiert und fahrerlos auf einem Zielparkplatz einparken zu lassen.

Bei einem aus US 2014/029852 A1 bekannten System werden Hindernisse auf einer Fahrbahn mittels Kameradaten detektiert. Hierzu extrahiert ein multidimensionalen Objekterkennungssystem Informationen aus den Kameradaten, auf die ein Bildklassifikator angewandt wird.

EP 2 689 650 A1 offenbart einen autonom betriebenen Rasenmäherroboter, bei dem eine Detektion von Hindernissen anhand eines Kamerabildes erfolgt. Sofern eine in diesem Zusammenhang vorgesehene Objektklassifizierung kein zuverlässiges Ergebnis liefert, wird ein entsprechendes Bild an das Smartphone eines Nutzers übertragen, der entscheiden kann, ob das betroffene Objekt abgemäht werden kann oder nicht.

US 2010/013615 A1 betrifft ein Hindernisdetektionsverfahren, bei dem mittels Daten eines Abstandsmessers und mehrerer Kameras eine Klassifizierung erfolgt, anhand der letztlich die Steuerung eines Fahrzeugs vorgenommen wird.

US 8 639 644 B1 offenbart ein cloudbasiertes Datenbanksystem. Bei diesem System ist vorgesehen, dass Informationen betreffend ein Objekt zu Aktualisierungszwecken gespeichert werden, auf das ein Roboter gestoßen ist. Das Datenbanksystem kann zu einen späteren Zeitpunkt auf diesen Informationen basierende Anweisungen an einen anderen Roboter senden.

Ein wesentlicher Bestandteil von Fahrzeugsystemen, die zur vollautomatischen Führung von Kraftfahrzeugen, insbesondere ohne Anwesenheit des Fahrers, ausgebildet sind, ist die Klassifizierung von über Umgebungssensoren des Kraftfahrzeugs detektierten Objekten als Hindernis oder kein Hindernis, um die weitere Trajektorie des automatischen Betriebs planen zu können. Umgebungssensoren, beispielsweise Kameras, Radarsensoren, Lidarsensoren, Ultraschallsensoren und dergleichen, liefern mithin Sensordaten, die Objekte in der Umgebung des Kraftfahrzeugs beschreiben und die im Rahmen einer Sensorfusion zu verschiedenen Objektinformationen für die einzelnen Objekte oder einzelne Segmente der Umgebung ausgewertet werden können. In diesem Kontext ist es bekannt, Klassifikatoren, insbesondere als durch Software umgesetzte Algorithmen realisiert, zu verwenden, um festzustellen, ob ein Objekt eine Gefahr darstellt oder ob es in der jeweiligen aktuellen Fahrsituation über- bzw. unterfahrbar ist. Bekannt ist es beispielsweise, Belegungskarten verwendende und/oder objektbasierte Umgebungsmodelle des Kraftfahrzeugs zu verwenden, die die fusionierten und gegebenenfalls bereits wenigstens teilweise ausgewerteten Sensordaten enthalten, welche nach Objekten aufteilbar sind und somit eine entsprechende Klassifizierung von Objekten als Hindernis oder kein Hindernis erlauben können. Selbstverständlich können dabei auch Klassifikatoren eingesetzt werden, die eine weitere, genauere Klassifizierung von Objekten ermöglichen, so dass beispielsweise Verkehrsschilder, Poller, Bordsteine und dergleichen automatisiert erkannt werden können, wobei durch den Klassifikator jedoch zumindest versucht wird, festzustellen, ob das Objekt ein Hindernis für das Kraftfahrzeug darstellt oder nicht, wobei die Klassifizierung als Hindernis oder kein Hindernis auch von der aktuellen Fahrsituation abhängen kann.

Jedoch ist es in vielen Fällen nicht trivial, festzustellen, ob ein Objekt ein Hindernis darstellt oder nicht. Beispielsweise kann der Fall auftreten, dass ein Objekt in den verwendeten Klassifikatoren unbekannt ist und somit überhaupt nicht oder nicht mit hinreichender Sicherheit zugeordnet werden kann. Probleme können auch auftreten, wenn eine Art "Sensortäuschung" auftritt, beispielsweise ein massiv wirkendes Objekt nicht massiv ist oder eine Farbveränderung kein dreidimensionaler Gegenstand. Klassische Beispiele für derartige Objekte, die schwer zu identifizieren sind oder beispielsweise fehlerhaft als ein Hindernis klassifiziert werden können, sind Laub, Schachteln aus Karton oder Papier, dunklere Flecken auf der Fahrbahn, die als ein Loch klassifiziert werden können, und dergleichen.

Beim automatischen Betrieb von Kraftfahrzeugen kann es insbesondere vorkommen, dass eine aktuelle Zielposition bzw. ein aktueller Zielort nicht erreicht werden kann, weil ein Objekt fehlerhaft als Hindernis oder Gefahr klassifiziert wurde. Derartige Probleme können beim heutigen technischen Stand auftreten, da eine generische und eindeutige Interpretierbarkeit von allgemeinen Objekten technisch noch nicht vollständig über die Umgebungssensorik des Kraftfahrzeugs dargestellt werden kann.

Der Erfindung liegt daher die Aufgabe zugrunde, die vollautomatisierte Führung von Kraftfahrzeugen im fahrerlosen Fall durch eine verbesserte Klassifikation schwer klassifizierbarer Objekte zu verbessern.

Zur Lösung dieser Aufgabe ist bei einem Verfahren der eingangs genannten Art erfindungsgemäß vorgesehen, dass bei einem nicht oder mit nicht hinreichender Sicherheit als Hindernis oder kein Hindernis klassifizierbaren Objekt und/oder bei wenigstens einem eine Weiterfahrt des Kraftfahrzeugs zu einem aktuellen Zielort verhindernden Objekt wenigstens ein Kamerabild des entsprechenden Objekts mit wenigstens einer der wenigstens einen Kamera aufgenommen wird, an eine tragbare, von einen Nutzer des Kraftfahrzeugs mitgeführte Mobilkommunikationseinrichtung übertragen und dort dargestellt wird, eine das Objekt als Hindernis oder kein Hindernis klassifizierende Eingabe des Nutzers als Klassifizierungsinformation entgegengenommen wird, die Klassifizierungsinformation an das Kraftfahrzeug zurückgetragen wird und bei der Trajektorienplanung berücksichtigt wird.

Die der Erfindung zugrundeliegende Idee ist es mithin, den Fahrer oder eine andere Person, beispielsweise eine ein Parkhaus überwachende Person, der bzw. die anhand vorliegenden Bildmaterials sowie ggf. weitere übersandter Daten Objekte verbessert beurteilen kann, als zusätzlichen Klassifikator heranzuziehen, um schwer klassifizierbare Objekte dennoch korrekt klassifizieren zu können und/oder bei einem fehlerhaften "Festfahren" des Kraftfahrzeugs dennoch ein Weiterfahren zu ermöglichen, wenn ein Objekt fehlerhaft als unüberwindbares Hindernis für das Kraftfahrzeug klassifiziert wurde. Mithin werden in einem Fall, in dem ein Kraftfahrzeug, insbesondere ein Personenkraftwagen, fahrerlos und vollständig automatisiert betrieben wird, mithin eine automatisierte Längs- und Querführung des Kraftfahrzeugs vorliegt, Kameras des Kraftfahrzeugs als Bildaufzeichnungsgerät genutzt, um dem Fahrer in bestimmten Situationen ein Kamerabild des Objektes als potenzielles Hindernis zur Verfügung zu stellen, so dass dieser die Weiterfahrt quittieren kann (Objekt ist kein Hindernis) oder das Objekt als gefährlich/hindernd einstufen kann.

Mithin werden, wie es bereits grundsätzlich bekannt ist, während des automatisierten Betriebs, ohne jeglichen Eingriff eines Fahrers, Objekte in der Umgebung des Kraftfahrzeugs klassifiziert und der Betrieb des Kraftfahrzeugs anhand dieser Klassifikation gesteuert. Um die Klassifikation zu ermöglichen, kann, wie grundsätzlich bekannt, vorgesehen sein, eine Sensorfusion der Sensordaten der verschiedenen Umgebungssensoren durchzuführen, um insbesondere ein Umgebungsmodell des Kraftfahrzeugs zu schaffen, welches beispielsweise in Form einer Belegungskarte und/oder als objektbasiertes Modell vorliegen kann. Wird beispielsweise eine Belegungskarte verwendet, können einzelnen Segmenten der Umgebung des Kraftfahrzeugs Informationen darüber zugeordnet werden, ob dort ein Objekt vorhanden ist (belegt = Hindernis) oder nicht, wobei auch die Zuordnung weiterer Metadaten möglich ist, beispielsweise bei sogenannten Baumkarten (Tree-Maps), in denen die Metadaten in einer Baumstruktur abgespeichert sind. Auch objektbasierte Ansätze sind jedoch bekannt, welche sich besonders vorteilhaft beim Vorliegen von dynamischen Objekten einsetzen lassen, die selbstverständlich auch über entsprechende Klassifikatoren klassifizierbar sein können. Die Klassifikatoren können, wie bereits dargelegt wurde, bevorzugt als in Software realisierte Algorithmen vorliegen. Es sind auch lernende Klassifikatoren denkbar.

Es existieren nun Nachfragekriterien, die in speziellen, insbesondere selten auftretenden Fällen zur Übertragung von Kamerabildern eines Objekts an eine Mobilkommunikationseinrichtung des Nutzers und zur Befragung desselben hinsichtlich der Klassifizierung führen können. Ein solches Anfragekriterium kann sein, dass ein Objekt nicht klassifiziert werden konnte oder zumindest nicht mit hinreichender Sicherheit, beispielsweise also bei einem unterhalb eines Schwellwerts liegenden Verlässlichkeitswert, als Hindernis oder kein Hindernis klassifiziert werden konnte. Ein ebenso einsetzbares Nachfragekriterium ist, dass keine zukünftig zu nutzende Trajektorie zum Zielort mehr berechnet werden kann, wobei der Wegfall eines bestimmten Objekts wenigstens eine solche Trajektorie ermöglichen würde. Die nicht bzw. nicht hinreichend genau durch die Klassifikatoren klassifizierbaren Objekte bzw. das störende, als Hindernis klassifizierte Objekt stellen im Sinne des Anfragekriteriums dann durch den Nutzer des Kraftfahrzeugs zu klassifizierende Objekte dar, die diesen mithin unter Nutzung der Kommunikationsverbindung zur Mobilkommunikationseinrichtung aufgrund der unter den Umgebungssensoren vorhandenen Kameras bildlich dargestellt werden kann. Der Fahrer kann die Klassifikation vornehmen, welche dann als Klassifizierungsinformation an das Kraftfahrzeug zurückübertragen wird, so dass dieses die Klassifizierungsinformation entsprechend bei der Trajektorienberechnung berücksichtigen kann.

Anders formuliert bedeutet dies, dass das Kraftfahrzeug selbst bereits Klassifizierungen von Objekten vornimmt, mithin auch entsprechend reagiert, wenn die Objekte bekannt sind und als Hindernisse klassifiziert werden, beispielsweise durch Verwendung von ausweichenden Trajektorien oder Weiterfahrt aufgrund bekannter Täuschung wenigstens eines Umgebungssensors, beispielsweise durch falsche Bodenmarkierung und dergleichen. Sind jedoch die Objekte unbekannt oder kann kein alternativer Fahrweg berechnet werden, wird Information zu diesen an eine mobile Einheit, die Mobilkommunikationseinrichtung, übertragen, so dass der Nutzer, üblicherweise ein Fahrer des Kraftfahrzeugs oder eine eine Parkumgebung überwachende Person, aufgefordert wird, das Objekt zu klassifizieren bzw. die Freigabe zum Fahren zu erteilen.

Auf diese Weise findet im Übrigen keine direkte Steuerung des Kraftfahrzeuges durch den Fahrer bzw. die weitere Person statt, sondern es wird lediglich eine Klassifikation vorgenommen. Der insgesamte Betrieb des Kraftfahrzeugs kann verbessert werden und es kann insbesondere auch ein fehlerhaftes Festfahren eines Kraftfahrzeugs im automatisierten Betrieb vermieden werden. Dabei ist der Fahrer bzw. die weitere Person für die Entscheidung des Überfahrens eines Objektes verantwortlich, da er mit der Klassifizierung als "kein Hindernis" letztlich willentlich der Weiterfahrt zustimmt. Auf diese Weise wird der Fahrer bzw. die weitere Person in kritischen Situationen als Klassifikator herangezogen, ohne dass eine dauerhafte Überwachung des vollautomatischen Betriebs des Kraftfahrzeugs notwendig ist.

Eine Weiterbildung der vorliegenden Erfindung sieht vor, dass als Mobilkommunikationseinrichtung ein Mobiltelefon, insbesondere ein Smartphone, verwendet wird. Mobiltelefone, insbesondere Smartphones, eignen sich besonders als Mobilkommunikationseinrichtung, da diese von vielen Nutzern von Kraftfahrzeugen ohnehin mit sich geführt werden können und insbesondere Smartphones über die sogenannten "Apps" eine einfach zu realisierende Möglichkeit bieten, eingehende Kamerabilder und gegebenenfalls Zusatzinformationen entgegen zu nehmen, darzustellen und die Eingabe des Nutzers entgegen zu nehmen, wonach die Klassifizierungsinformation an das Kraftfahrzeug rückübertragen wird.

Die Übertragung des Kamerabildes und der Klassifizierungsinformation kann dabei über verschiedene bekannte drahtlose Kommunikationsverbindungen erfolgen, bevorzugt wenigstens teilweise über
- ein Mobilfunknetzwerk, insbesondere bei Verwendung eines Mobiltelefons, oder
- ein W-LAN oder
- ein Mobilfunknetzwerk und ein W-LAN.

Dabei ist es, allgemein gesagt, nicht zwangsläufig notwendig, die Übermittlung des Kamerabildes und der Klassifizierungsinformation unmittelbar zwischen dem Kraftfahrzeug und der Kommunikationseinrichtung vorzunehmen, sondern es kann im Gegenteil äußerst zweckmäßig sein, wenn die Übermittlung über eine ortsfeste, kraftfahrzeugexterne Servereinrichtung, insbesondere ein Backend, erfolgt. Eine derartige Servereinrichtung, die beispielsweise einer befahrenen Umgebung, insbesondere einer Parkumgebung wie einem Parkhaus, zugeordnet sein kann, kann dabei auch weitere, dem vollständig automatisierten Betrieb von Kraftfahrzeugen in der Umgebung zuträgliche Funktionen realisieren, beispielsweise eine digitale Karte der Umgebung zur Verfügung zu stellen und dergleichen. Im Rahmen der vorliegenden Erfindung kann eine solche Servereinrichtung zunächst zweckmäßig eingesetzt werden, um übertragene Kamerabilder (sowie gegebenenfalls Zusatzinformationen) und die Klassifizierungsinformation als Ereignisinformation abzuspeichern, so dass diese im Folgenden nachvollziehbar sind und beispielsweise Fehlklassifizierungen durch den Nutzer nachverfolgt werden können.

Besonders zweckmäßig ist es jedoch, wenn auf der Servereinrichtung digitale, den Bereich (die Umgebung), in dem sich das Kraftfahrzeug bewegt, beschreibende Kartendaten gespeichert sind, wobei die durch einen Nutzer klassifizierten Objekte mit den zugeordneten Klassifizierungsinformationen in den Kartendaten abgespeichert werden. Auf diese Weise wird mithin durch den nutzerseitigen Klassifizierungsvorgang eine Erweiterung der digitalen Kartendaten vorgenommen, die für nachfolgende Kraftfahrzeuge eine hervorragende Grundlage bietet, um, insbesondere auch ohne ein vorheriges Nachfragen beim Nutzer, den vollautomatisierten Betrieb fortzusetzen, indem in der Karte bereits vorliegende, von anderen Nutzern stammende Klassifizierungsinformationen herangezogen werden. Mit besonderem Vorteil kann dabei vorgesehen sein, dass Klassifizierungsinformationen mehrerer Nutzer für dasselbe Objekt statistisch zu einer Gesamtklassifizierungsinformation ausgewertet werden. Mithin ist eine statistische Auswertung der Klassifikationsinformationen zu einem bestimmten Objekt denkbar, um einzelne Fehlkategorisierungen durch Nutzer auszuschließen. Beispielsweise kann vorgesehen sein, dass eine Gesamtklassifizierungsinformation erst dann für andere automatisiert betriebene Kraftfahrzeuge zur Verfügung gestellt wird, wenn eine bestimmte Anzahl an nutzerseitigen Einzelklassifizierungsinformationen vorliegt, die ausgewertet werden können, um Fehlklassifizierungen möglichst zu vermeiden, wobei beispielsweise zur Klassifizierung eines Objekts "kein Hindernis" als Gesamtklassifizierungsinformation in den digitalen Kartendaten abgelegt werden kann, wenn ein einen Schwellwert überschreitender Anteil der Nutzer, beispielsweise über 60 % der Nutzer, das Objekt als "kein Hindernis" klassifiziert haben. Besonders vorteilhaft lassen sich derartige Ausgestaltungen in Parkumgebungen einsetzen, beispielsweise Parkhäusern, denen die Servereinrichtung zugordnet sein kann.

Insgesamt ist es besonders vorteilhaft, wenn die digitalen Kartendaten von der Servereinrichtung an das Kraftfahrzeug übertragen und bei der automatischen Führung des Kraftfahrzeugs berücksichtigt werden. Beispielsweise kann im Fall einer Parkumgebung immer bei Einfahrt des Kraftfahrzeugs in die Parkumgebung die aktuellste Version der digitalen Kartendaten an das Kraftfahrzeug übertragen werden, welches den automatischen Betrieb anhand dieser digitalen Kartendaten steuert, die besonders zweckmäßig auch die Klassifizierungsinformationen anderer Nutzer, insbesondere statistisch zu einer Gesamtklassifizierungsinformation ausgewertet, enthalten. Somit werden die Klassifizierungsentscheidungen anderer Nutzer nutzbringend weiterverwertet.

In vorteilhafter Weiterbildung kann auf der Mobilkommunikationseinrichtung wenigstens eine Zusatzinformation, insbesondere eine mit dem Kamerabild übertragene Zusatzinformation, zu dem zu klassifizierenden Objekt angezeigt werden. Mithin ist es möglich, Zusatzinformationen zu liefern, die dem Nutzer eine verbesserte Einschätzung der Gesamtfahrsituation des Kraftfahrzeugs bieten können. Zweckmäßig kann es in diesem Kontext beispielsweise vorgesehen sein, dass als Zusatzinformation eine Karte der aktuellen Umgebung des Kraftfahrzeugs verwendet wird, wobei in der Karte der Ort
- des zu klassifizierenden Objekts oder
- weiterer, bereits klassifizierter Objekte oder
- des Kraftfahrzeugs oder
- des zu klassifizierenden Objekts und weiterer, bereits klassifizierter Objekte oder
- des zu klassifizierenden Objekts und des Kraftfahrzeugs oder
- weiterer, bereits klassifizierter Objekte und des Kraftfahrzeugs oder
- des zu klassifizierenden Objekts und weiterer, bereits klassifizierter Objekte und des Kraftfahrzeugs
dargestellt ist. Als Zusatzinformation können durch Umgebungssensoren, insbesondere Ultraschallsensoren und/oder Radarsensoren und/oder Laserscanner, ermittelte Abmessungen des Objekts verwendet werden. Auch andere Sensordaten weiterer Umgebungssensoren neben der Kamera können nützlich sein. Das Objekt kann so vom Nutzer in einen Gesamtkontext einsortiert und verbessert beurteilt werden.

Vorteilhaft ist es ferner, wenn das Kamerabild vor der Anzeige zur besseren Lesbarkeit nachbearbeitet wird, insbesondere entzerrt wird. Viele Sensordaten für Fahrzeugsysteme liefernde, als Umgebungssensoren eingesetzte Kameras nutzen besondere Bildformate und Optiken, beispielsweise Weitwinkelobjektive oder Fisheye-Optiken, um eine möglichst weiträumige Erfassung zu erlauben. Die entstehenden Kamerabilder sind teilweise verzerrt und können durch einen Nutzer gegebenenfalls nicht unmittelbar und auf einfache Art und Weise interpretiert werden. Daher wird vorgeschlagen, die Kamerabilder so nachzubearbeiten, dass sie für einen Nutzer leichter lesbar sind, wobei besonders bevorzugt eine Entzerrung vorgenommen wird. Eine andere Variante sieht vor, dass bei einem im Überlappungsbereich und/oder Berührungsbereich der Erfassungsbereiche unterschiedlicher Kameras gelegenen Objekt das zu übersendende Kamerabild aus wenigstens zwei insbesondere jeweils einen Teil des Objekts zeigenden Rohbildern unterschiedlicher Kameras zusammengesetzt wird. Dieser Vorgang ist auch unter dem Schlagwort "Stitching" von Bildern bekannt.

Wie bereits angedeutet wurde, wird vorzugsweise zur Ausführung der seitens der Mobilkommunikationseinrichtung vorzunehmenden Schritte eine Software-Applikation verwendet. Gerade auf den sogenannten Smartphones, aber auch beispielsweise auf Tablets oder dergleichen als Mobilkommunikationseinrichtungen, sind derartige Software-Applikationen als sogenannte "Apps" bekannt. Eine derartige Applikation ermöglicht es also, dass dem Nutzer des Kraftfahrzeugs auf seinem mobilen Endgerät ein Kamerabild des Objektes bzw. der Situation sowie gegebenenfalls eine Kartendarstellung angezeigt werden können. Die Eingabe wird, insbesondere über geeignete Bedienelemente, entgegengenommen und rückübertragen, bevorzugt, wie bereits erwähnt, über eine Servereinrichtung.

In einer bevorzugten Ausführungsform werden im gesamten Winkelbereich das Umfeld des Kraftfahrzeugs abdeckende Kameras verwendet, insbesondere wenigstens vier mit einem Weitwinkelobjektiv versehene Kameras. Derartige Kameraanordnungen sind als sogenannte Top-View-Kameras bereits bekannt, nachdem sie häufig beispielsweise entlang des Randes des Daches angeordnet sind, um das Umfeld des Kraftfahrzeugs in den vollen 360° des Winkelbereichs erfassen zu können. Derartige Top-View-Kameras dienen beispielsweise auch Fahrzeugsystemen, die eine Rundumsicht um das Kraftfahrzeugs im Kraftfahrzeug ermöglichen können und/oder eine Art Aufsichtbild auf das Kraftfahrzeug erzeugen können. Sie sind im Rahmen der vorliegenden Erfindung besonders vorteilhaft einsetzbar, da Objekte unabhängig vom Winkel zum Kraftfahrzeug in einem Kamerabild erfasst und mithin einem Nutzer auf der Mobilkommunikationseinrichtung zur Anzeige gebracht werden können.

Neben dem Verfahren betrifft die Erfindung auch ein Überwachungssystem, aufweisend ein automatisiert führbares Kraftfahrzeug, das als Personenkraftwagen ausgebildet ist, mit Umgebungssensoren, umfassend wenigstens eine Kamera, deren aufgenommene Sensordaten hinsichtlich bei der Trajektorienplanung zu berücksichtigender Objekte seitens eines Steuergeräts auswertbar sind, welche Objekte über wenigstens einen die zugehörigen Sensordaten auswertenden Klassifikator als Hindernis oder kein Hindernis klassifizierbar sind, und eine Mobilkommunikationseinrichtung, wobei das Überwachungssystem zur Durchführung des erfindungsgemäßen Verfahrens ausgebildet ist. Sämtliche Ausführungen bezüglich des erfindungsgemäßen Verfahrens lassen sich analog auf das erfindungsgemäße Überwachungssystem übertragen, mit welchem mithin ebenso die bereits genannten Vorteilte erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Überwachungssystem,
- Fig. 2: einen Ablaufplan eines Ausführungsbeispiels des erfindungsgemäßen Verfahrens,
- Fig. 3: eine beispielhafte Fahrsituation,
- Fig. 4: eine beispielhafte Darstellung auf einer Mobilkommunikationseinrichtung, und
- Fig. 5: die statistische Auswertung von Klassifizierungsinformationen.

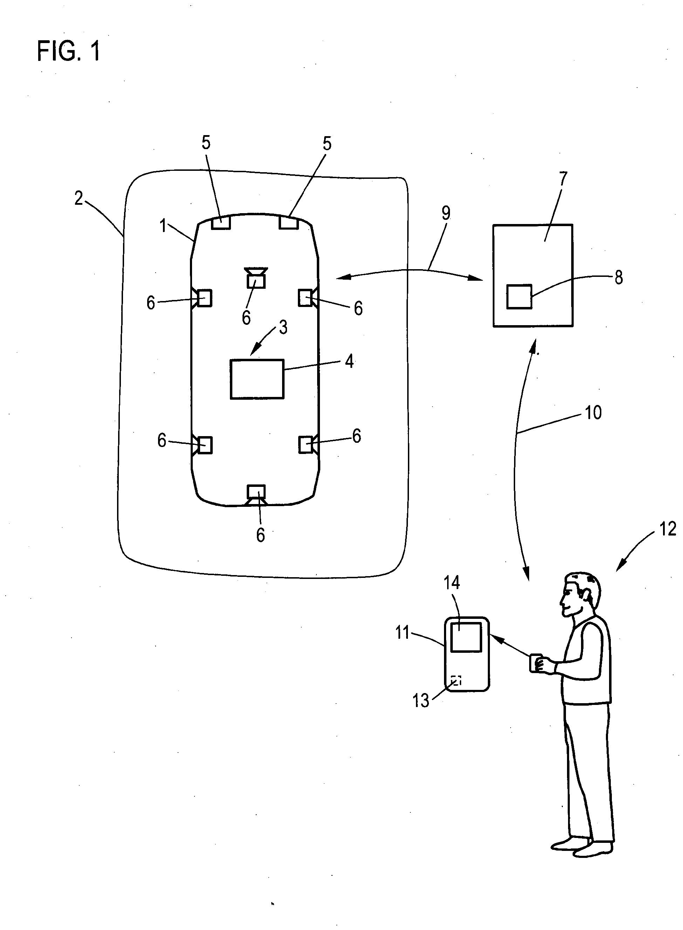

Fig. 1 zeigt in Form einer Prinzipskizze ein erfindungsgemäßes Überwachungssystem, das vorliegend in einer Parkumgebung, insbesondere einem Parkhaus, eingesetzt wird, in dem Kraftfahrzeuge, die entsprechend ausgebildet sind, fahrerlos und vollständig automatisch geführt zu ihrem entsprechenden Parkplatz fahren und dort ein- bzw. ausparken können. Selbstverständlich lässt sich das Verfahren jedoch auch auf andere von Kraftfahrzeugen vollautomatisch befahrbare Bereiche übertragen.

Ein Kraftfahrzeug 1 befindet sich in der hier nur schematisch dargestellten Parkumgebung 2 und wird vollautomatisiert ohne einen Fahrer betrieben, wofür ein entsprechendes Fahrzeugsystem 3 mit einem Steuergerät 4 verwendet wird, welches auch zur Ausführung der kraftfahrzeugseitigen Schritte des im Folgenden noch erläuterten erfindungsgemäßen Verfahrens ausgebildet ist. Das Kraftfahrzeug 1 weist eine Vielzahl von Umgebungssensoren auf, von denen vorliegend der Übersichtlichkeit halber nur die Radarsensoren 5 und sechs Kameras 6 gezeigt sind, die jeweils mit einem Weitwinkelobjektiv versehen sind und somit die Umgebung des Kraftfahrzeugs über den gesamten 360°-Winkelbereich abdecken können.

Die Sensordaten der Umgebungssensoren werden, beispielsweise durch das Steuergerät 4, in einem Umgebungsmodell des Kraftfahrzeugs 1 fusioniert, wobei das Umgebungsmodell vorliegend verschiedene Objekte in der Umgebung des Kraftfahrzeugs 1 durch die Sensordaten beschreibt. Mittels durch Software im Steuergerät 4 realisierte Klassifikatoren kann festgestellt werden, ob die Objekte als ein Hindernis anzusehen sind oder über- bzw. unterfahrbar sind. Selbstverständlich können die Klassifikatoren auch weitere, genauere Informationen über die Objekte liefern, beispielsweise ob es sich um ein anderes abgestelltes Kraftfahrzeug, ein Verkehrsschild, einen Pfeiler und dergleichen handelt, soweit entsprechende Klassifikatoren vorgesehen sind.

Auf Grundlage der klassifizierten Objekte in dem Umgebungsmodell ist eine automatische Führung des Kraftfahrzeugs 1 in der Parkumgebung 2 möglich. Dies wird ferner unterstützt durch von einer ebenso zum Überwachungssystem gehörigen, als Backend-Server dienenden Servereinrichtung 7, die als Infrastruktureinrichtung der Parkumgebung 2 zugeordnet ist, übertragenen digitalen Kartendaten, die dort in einer Speichereinrichtung 8 vorgehalten werden. Zwischen der Servereinrichtung 7 und dem Kraftfahrzeug 1 existiert mithin eine Kommunikationsverbindung 9, vorliegend eine WLAN-Verbindung, die mit Befahren der Parkumgebung 2 durch das Kraftfahrzeug 1 hergestellt wird. Selbstverständlich sind auch andere Arten von Kommunikationsverbindungen für die Kommunikationsverbindung 9 denkbar.

Über die Servereinrichtung 7 oder direkt durch das Kraftfahrzeug 1 kann auch eine Kommunikationsverbindung 10 zu einer Mobilkommunikationseinrichtung 11 eines Nutzers 12 des Kraftfahrzeugs 1 aufgebaut werden, wobei die Kommunikationsverbindung 10 vorliegend über ein Mobilfunknetzwerk aufgebaut wird. Entsprechend handelt es sich bei der Kommunikationseinrichtung 11, die vom Nutzer 12 getragen wird, um ein Mobiltelefon, konkret ein Smartphone. Dieses weist, wie grundsätzlich bekannt, ein Display 14 auf, auf dem Informationen dargestellt werden können. Auf der Mobilkommunikationseinrichtung 11 ist eine Software-Applikation 13 ("App") installiert, die ebenso im Rahmen des nun zu erläuterten erfindungsgemäßen Verfahrens eingesetzt wird.

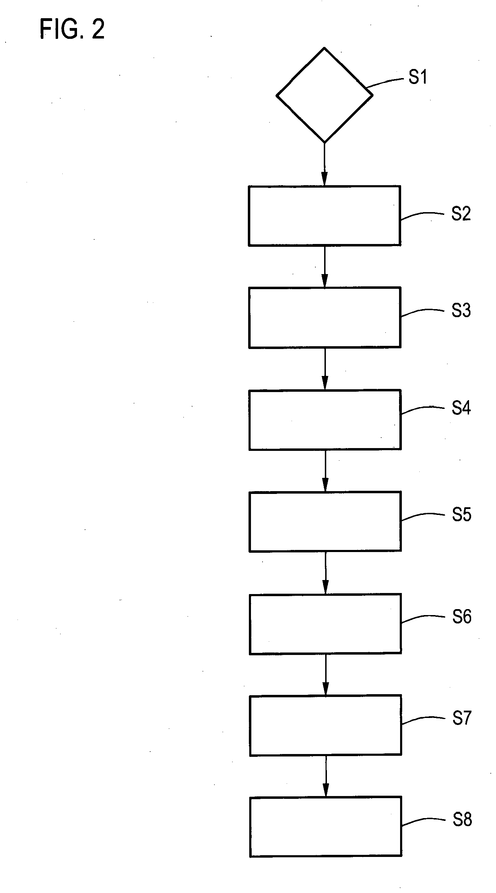

Beim nun dargestellten Ausführungsbeispiel des erfindungsgemäßen Verfahrens, vgl. Fig. 2, wird davon ausgegangen, dass jedwede Kommunikation zwischen dem Kraftfahrzeug 1 und der Mobilkommunikationseinrichtung 11 über die Servereinrichtung 7, mithin die Kommunikationsverbindungen 9 und 10 erfolgt, wofür das Kraftfahrzeug 1 der Servereinrichtung 7 beispielsweise eine Kommunikationsadresse der Kommunikationseinrichtung 11 im Mobilfunknetzwerk, konkret also eine Telefonnummer, mitteilen kann, ggf. aber auch eine User-ID, die bei der Kopplung mit dem Kraftfahrzeug 1 generiert wurde.

Ferner sei vorangestellt angemerkt, dass mit Befahren der Parkumgebung 2 durch das Kraftfahrzeug 1 die Servereinrichtung 7 dem Kraftfahrzeug 1 die in der Speichereinrichtung 8 vorliegenden digitalen Kartendaten der Parkumgebung 2 zur Verfügung gestellt hat, um den vollautomatisierten, fahrerlosen Betrieb des Kraftfahrzeugs 1 mittels des Fahrzeugsystems 3 zu unterstützen.

Fig. 2 zeigt nun einen Ablaufplan eines Ausführungsbeispiels des erfindungsgemäßen Verfahrens. Dort wird während des vollautomatischen Betriebs des Kraftfahrzeugs 1 in einem Schritt S1 ständig überprüft, ob ein Nachfragekriterium zur Anfrage bezüglich eines durch den Nutzer 12 zu klassifizierenden Objekts erfüllt ist. Dabei werden vorliegend zwei Anfragekriterien betrachtet. Das erste Anfragekriterium überprüft, ob ein durch die Umgebungssensoren detektiertes Objekt nicht oder nicht hinreichend verlässlich klassifiziert werden kann, also mithin, ob keiner der Klassifikatoren im Steuergerät 4 ein Ergebnis lieferte, dass das Objekt als Hindernis oder als kein Hindernis klassifizierte, oder ob eine mögliche Klassifizierung nicht verlässlich genug ist, mithin ein Schwellwert für einen Verlässlichkeitswert unterschritten ist. Das zweite Anfragekriterium löst immer dann aus, wenn wenigstens ein Objekt die Weiterfahrt des Kraftfahrzeugs 1 derart blockiert, dass ein aktueller Zielort nicht mehr erreichbar wäre. In diesem Fall ist das durch einen Benutzer zu klassifizierende Objekt das wenigstens eine die Weiterfahrt hindernde Objekt, insbesondere das wenigstens eine Objekt, welches am unsichersten klassifiziert wurde und/oder welches als einziges oder eines von wenigen Objekten die Weiterfahrt verhindert. Selbstverständlich sind entsprechende Verfeinerungen des Anfragekriteriums vorgesehen, so dass nicht alle Objekte in der Umgebung des Kraftfahrzeugs 1 als durch den Benutzer zu klassifizierende Objekte ausgewählt werden.

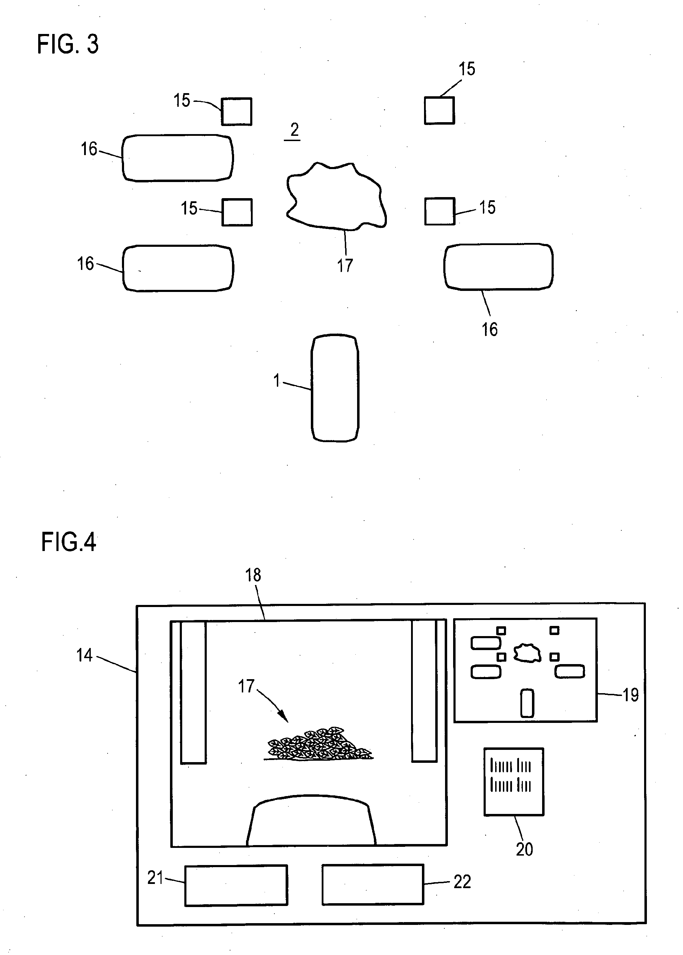

Fig. 3 zeigt beispielhaft eine Fahrsituation des Kraftfahrzeugs 1 innerhalb der Parkumgebung 2. Ersichtlich sind durch Säulen 15 getrennte Parkplätze wenigstens teilweise durch weitere Kraftfahrzeuge 16 belegt. Vor dem Kraftfahrzeug 1 befindet sich ein nicht klassifizierbares Objekt 17, vorliegend ein Laubhaufen. Nachdem der Laubhaufen 17 durch das Steuergerät 4 des Kraftfahrzeugs 1 nicht klassifizierbar ist, ist unklar, ob er ein Hindernis zur Weiterfahrt darstellt. Mithin ist das erste Nachfragekriterium im Schritt S1 erfüllt. Vorliegend ist jedoch beispielhaft auch das zweite Nachfragekriterium im Schritt S1 erfüllt, denn offensichtlich kann das Kraftfahrzeug 1 das Objekt 17 nicht als gefahrlos überfahrbar, also "kein Hindernis" klassifizieren, und daher seinen Weg nicht fortsetzen, da das Objekt 17 weder links noch rechts umfahren werden kann. Mit anderen Worten droht ein "Festfahren" des Kraftfahrzeugs, da keine alternative Trajektorie berechnet werden kann.

Ist also wenigstens ein Nachfragekriterium im Schritt S1 erfüllt, wird in einem Schritt S2 eine Kommunikationsinformation bezüglich des durch den Nutzer 12 zu klassifizierenden Objekts 17 zusammengestellt. Diese enthält zum einen ein Kamerabild der nach vorne gerichteten Kamera 6, welches zur besseren Lesbarkeit entsprechend entzerrt wurde, nachdem die Eigenschaften des entsprechenden Weitwinkelobjektivs bekannt sind. Ferner werden Zusatzinformationen zu dem Objekt 17, die auch durch die Umgebungssensoren gesammelt wurden, beigefügt, beispielsweise Abmessungen des Objekts 17; schließlich ist in der Kommunikationsinformation als Zusatzinformation eine Karte mit der momentanen Umgebung des Kraftfahrzeugs 1 beigefügt, aus der die Position des Kraftfahrzeugs 1, des Objekts 17 sowie weiterer Objekte ersichtlich ist. Diese Kommunikationsinformation wird im Schritt S2 zunächst an die Servereinrichtung 7 übertragen, welche einen Verweis auf die Anfrage entsprechend speichert und die Kommunikationsverbindung 10 nutzt, um die Kommunikationsinformation an die Mobilkommunikationseinrichtung 11 weiter zu übertragen, was im Schritt S3 geschieht.

Im Schritt S4 nimmt die Software-Applikation 13 die Kommunikationsinformation entgegen, gibt eine optische und/oder akustische und/oder haptische Hinweisinformation an den Nutzer 12 aus, so dass dieser auf die Anfrage aufmerksam wird, und erzeugt eine Darstellung für das Display 14, wie sie beispielhaft in Fig. 4 dargestellt ist. Ersichtlich wird ein großer Teil der Darstellung auf dem Display 14 von dem Kamerabild 18 eingenommen. Kleiner sind zu erkennen sind die Karte 19 sowie weitere Zusatzinformationen 20, beispielsweise die Abmessungen. Unterhalb des Kamerabildes 18 sind zwei Bedienelemente 21, 22 dargestellt, durch die der Nutzer das Objekt 17, welches in dem Kamerabild 18 auch hervorgehoben werden kann, klassifizieren kann. Betätigt der Nutzer 12 das Bedienelement 21, wird eine Klassifizierungsinformation erzeugt, die das Objekt 17 als Hindernis beschreibt, betätigt er das Bedienelement 22, wird eine Klassifizierungsinformation erzeugt, die das Objekt 17 als "kein Hindernis" klassifiziert. Selbstverständlich können durch die Software-Applikationen 13 auch weitere Funktionalitäten bereitgestellt werden, beispielsweise eine Vergrößerung der Karte 19, eine Anzeige weiterer Zusatzinformationen und dergleichen.

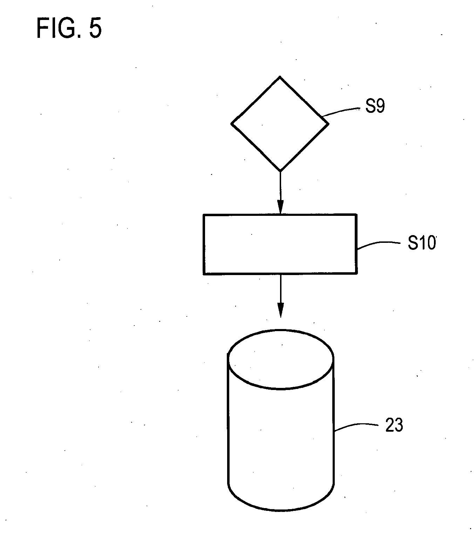

Im Schritt S5 wird mithin die Eingabe des Nutzers 12 über die Bedienelemente 21, 22 entgegengenommen und die Klassifizierungsinformation erzeugt, welche zunächst an die Servereinrichtung 7 zurückübertragen wird, Schritt S6. In der Servereinrichtung 7 wird die Klassifizierungsinformation in einem Schritt S7 mit dem zugehörigen Objekt 17 in der Speichereinrichtung 8 abgelegt, weiter ausgewertet, was im Hinblick auf Fig. 5 weiter erläutert werden soll, und über die Kommunikationsverbindung 9 an das Kraftfahrzeug 1 weitergegeben.

Im Kraftfahrzeug 1 wird die Klassifizierungsinformation im Schritt S8 entsprechend zur weiteren automatisierten Führung des Kraftfahrzeugs 1 berücksichtigt. Im in Fig. 3 dargestellten Fall wird der Fahrer den Laubhaufen, also Objekt 17, vermutlich als kein Hindernis, mithin überfahrbar, kennzeichnen, so dass der automatisierte Fahrbetrieb fortgesetzt werden kann.

Fig. 5 zeigt schließlich einen Ablaufplan der statistischen Auswertung von Klassifizierungsinformationen, die dasselbe zu klassifizierende Objekt 17 betreffen, in der Servereinrichtung 7. In einem Schritt S9 wird dort überprüft, ob hinreichend viele Klassifizierungsinformationen verschiedener Nutzer 12 vorliegen, um eine statistische Auswertung vornehmen zu können. Ist dies der Fall, wird in Schritt S10 überprüft, welche Klassifizierung die meisten Nutzer 12 vorgenommen haben und ob der Anteil der Nutzer 12, die diese Klassifizierung vorgenommen haben, einen Schwellwert übersteigt. Ist letzteres der Fall, wird eine Gesamtklassifizierungsinformation 23 erzeugt, die dem Objekt 17 zugehörig in die digitalen Kartendaten eingepflegt wird und mithin weiteren Kraftfahrzeugen zur Verfügung gestellt wird.

In diesem Fall kann Schritt S3 der Fig. 2 dahingehend erweitert sein, dass dann, wenn eine Gesamtklassifizierungsinformation 23 zu dem Objekt 17 bereits vorliegt, diese unmittelbar als Antwort an das Kraftfahrzeug 1 zurückgegeben wird, mithin die Nachfrage bei dem Nutzer nicht mehr notwendig ist und unmittelbar mit Schritt S8 fortgefahren werden kann.

## Patentansprüche

1. Verfahren zum Betrieb eines automatisiert geführten, fahrerlosen Kraftfahrzeugs (1), das als Personenkraftwagen ausgebildet ist, wobei durch Umgebungssensoren, umfassend wenigstens eine Kamera (6), des Kraftfahrzeugs (1) aufgenommene Sensordaten hinsichtlich bei einer Trajektorienplanung zu berücksichtigender Objekte (17) ausgewertet werden, welche Objekte (17) über wenigstens einen die zugehörigen Sensordaten auswertenden Klassifikator als Hindernis oder kein Hindernis klassifizierbar sind,
**dadurch gekennzeichnet,**
**dass** bei einem nicht oder mit nicht hinreichender Sicherheit als Hindernis oder kein Hindernis klassifizierbaren Objekt (17) und/oder bei wenigstens einem eine Weiterfahrt des Kraftfahrzeugs (1) zu einem aktuellen Zielort verhindernden Objekt (17) wenigstens ein Kamerabild (18) des entsprechenden Objekts (17) mit wenigstens einer der wenigstens einen Kamera (6) aufgenommen wird, an eine tragbare, von einem Nutzer (12) des Kraftfahrzeugs (1) mitgeführte Mobilkommunikationseinrichtung (11) übertragen und dort dargestellt wird, eine das Objekt (17) als Hindernis oder kein Hindernis klassifizierende Eingabe eines Nutzers (12) als Klassifizierungsinformation entgegengenommen wird, die Klassifizierungsinformation an das Kraftfahrzeug (1) zurückübertragen wird und bei der Trajektorienplanung berücksichtigt wird.

2. Verfahren nach Anspruch 1,
**dadurch gekennzeichnet,**
**dass** als Mobilkommunikationseinrichtung (11) ein Mobiltelefon verwendet wird.

3. Verfahren nach Anspruch 1 oder 2,
**dadurch gekennzeichnet,**
**dass** die Übermittlung des Kamerabildes (18) und der Klassifizierungsinformation über eine ortsfeste, kraftfahrzeugexterne Servereinrichtung (7) erfolgt.

4. Verfahren nach Anspruch 3,
**dadurch gekennzeichnet,**
**dass** auf der Servereinrichtung (7) digitale, den Bereich, in dem sich das Kraftfahrzeug (1) bewegt, beschreibende Kartendaten gespeichert sind, wobei die durch einen Nutzer (12) klassifizierten Objekte (17) mit den zugeordneten Klassifizierungsinformationen in den Kartendaten abgespeichert werden.

5. Verfahren nach Anspruch 4,
**dadurch gekennzeichnet,**
**dass** Klassifizierungsinformationen mehrerer Nutzer (12) für dasselbe Objekt (17) statistisch zu einer Gesamtklassifizierungsinformation (23) ausgewertet werden.

6. Verfahren nach Anspruch 4 oder 5,
**dadurch gekennzeichnet,**
**dass** die digitalen Kartendaten von der Servereinrichtung (7) an das Kraftfahrzeug (1) übertragen und bei der automatischen Führung des Kraftfahrzeugs (1) berücksichtigt werden.

7. Verfahren nach einem der vorangehenden Ansprüche,
**dadurch gekennzeichnet,**
**dass** die Übermittlung des Kamerabildes (18) und der Klassifizierungsinformation wenigstens teilweise über
- ein Mobilfunknetzwerk oder
- ein WLAN oder
- ein Mobilfunknetzwerk und ein WLAN
erfolgt.

8. Verfahren nach einem der vorangehenden Ansprüche,
**dadurch gekennzeichnet,**
**dass** auf der Mobilkommunikationseinrichtung (11) wenigstens eine Zusatzinformation (20) zu dem zu klassifizierenden Objekt (17) angezeigt wird.

9. Verfahren nach Anspruch 8,
**dadurch gekennzeichnet,**
**dass** als Zusatzinformation (20) eine Karte (19) der aktuellen Umgebung des Kraftfahrzeugs (1) verwendet wird, wobei in der Karte (19) der Ort
- des zu klassifizierenden Objekts (17) oder
- weiterer, bereits klassifizierter Objekte oder
- des Kraftfahrzeugs (1) oder
- des zu klassifizierenden Objekts (17) und weiterer, bereits klassifizierter Objekte oder
- des zu klassifizierenden Objekts (17) und des Kraftfahrzeugs (1) oder
- weiterer, bereits klassifizierter Objekte und des Kraftfahrzeugs (1) oder
- des zu klassifizierenden Objekts (17) und weiterer, bereits klassifizierter Objekte und des Kraftfahrzeugs (1)
dargestellt ist.

10. Verfahren nach Anspruch 8 oder 9,
**dadurch gekennzeichnet,**
**dass** als Zusatzinformation (20) durch Umgebungssensoren ermittelte Abmessungen des Objekts (17) verwendet werden.

11. Verfahren nach einem der vorangehenden Ansprüche,
**dadurch gekennzeichnet,**
**dass** das Kamerabild (18) vor der Anzeige zur besseren Lesbarkeit nachbearbeitet wird.

12. Verfahren nach einem der vorangehenden Ansprüche,
**dadurch gekennzeichnet,**
**dass** zur Ausführung der seitens der Mobilkommunikationseinrichtung (11) vorzunehmenden Schritte eine Software-Applikation (13) verwendet wird.

13. Verfahren nach einem der vorangehenden Ansprüche,
**dadurch gekennzeichnet,**
**dass** im gesamten Winkelbereich das Umfeld des Kraftfahrzeugs (1) abdeckende Kameras (6) verwendet werden.

14. Überwachungssystem, aufweisend ein automatisiert führbares Kraftfahrzeug (1), das als Personenkraftwagen ausgebildet ist, mit Umgebungssensoren, umfassend wenigstens eine Kamera (6), deren aufgenommene Sensordaten hinsichtlich bei einer Trajektorienplanung zu berücksichtigender Objekte (17) seitens eines Steuergeräts (4) auswertbar sind, welche Objekte (17) über wenigstens einen die zugehörigen Sensordaten auswertenden Klassifikator als Hindernis oder kein Hindernis klassifizierbar sind, und eine Mobilkommunikationseinrichtung (11), ausgebildet zur Durchführung eines Verfahrens nach einem der vorangehenden Ansprüche.

## Claims

1. Method for operating an automatically driven, driverless motor vehicle (1), which is in the form of a passenger car, wherein sensor data recorded by environment sensors of the motor vehicle (1), comprising at least one camera (6), are evaluated with respect to objects (17) to be taken into account when planning the trajectory, which objects (17) can be classified either as an obstacle or not an obstacle by using at least one classifier evaluating the associated sensor data,
**characterised in that**
in case of an object (17) that cannot be classified at all or cannot be classified with sufficient certainty as either being an obstacle or not being an obstacle and/or in case of at least one object (17) preventing further driving of the motor vehicle (1) to a current destination, at least one camera image (18) of the corresponding object (17) is taken by at least one of the at least one cameras (6), is transmitted to a portable mobile communication device (11) carried by a user (12) of the motor vehicle (1) and is displayed there, an input of a user (12) classifying the object (17) as being an obstacle or not being an obstacle is received as classification information, the classification information is sent back to the vehicle (1) and is taken into account when planning the trajectory.

2. Method according to claim 1,
**characterised in that**
a mobile phone is used as the mobile communication device (1).

3. Method according to claim 1 or 2,
**characterised in that**
the transmission of camera image (18) and of the classification information is performed via a fixed server device (7) external to the motor vehicle.

4. Method according to claim 3,
**characterised in that**
digital map data describing the area in which the motor vehicle (1) is driving is stored on the server device (7), wherein the objects (17) classified by a user (12) are stored in the map data with the assigned classification information.

5. Method according to claim 4,
**characterised in that**
classification information of several users (12) for the same object (17) is evaluated statistically to form overall classification information (23).

6. Method according to claim 4 or 5,
**characterised in that**
the digital map data are transmitted from the server device (7) to the motor vehicle (1) and are take into account for the automatic driving of the motor vehicle (1).

7. Method according to any of the preceding claims,
**characterised in that**
the transmission of the camera image (18) and of the classification information is performed at least partly by
- a mobile radio network or
- a WLAN or
- a mobile radio network and a WLAN.

8. Method according to any of the preceding claims,
**characterised in that**
on the mobile communication device (11) at least one piece of additional information (20) regarding the object (17) to be classified is displayed.

9. Method according to claim 8,
**characterised in that**
as additional information (20) a map (19) of the current surroundings of the motor vehicle (1) is used, wherein the map (19) shows the location
- of the object (17) to be classified or
- of further, already classified objects or
- of the motor vehicle (1) or
- of the object (17) to be classified and further, already classified objects or
- of the object (17) to be classified and the motor vehicle (1) or
- of further, already classified objects and the motor vehicle (1) or
- of the object (17) to be classified and further already classified objects and the motor vehicle (1).

10. Method according to claim 8 or 9,
**characterised in that**
as additional information (20) dimensions of the object (17) determined by environmental sensors are used.

11. Method according to any of the preceding claims,
**characterised in that**
the camera image (18) is reworked before display for better legibility.

12. Method according to any of the preceding claims,
**characterised in that**
for performing the steps to be carried out by the mobile communication device (11) a software application (13) is used.

13. Method according to any of the preceding claims,
**characterised in that**
for the whole angular range cameras (6) covering the area surrounding the motor vehicle (1) are used.

14. Monitoring system, having an automatically driven motor vehicle (1) which is in the form of a passenger vehicle, with environmental sensors, comprising at least one camera (6), recorded sensor data of which are evaluated by a control device (4) with respect to objects (17) to be taken into consideration for planning a trajectory, which objects (17) can be classified either as an obstacle or not an obstacle using at least one classifier evaluating the associated sensor data, and a mobile communication device (11) designed for performing a method according to any of the preceding claims.

## Revendications

1. Procédé pour faire fonctionner un véhicule à moteur (1) sans conducteur à pilotage automatique, qui est réalisé comme voiture particulière, dans lequel des données de capteur enregistrées par des capteurs d'environnement, comprenant au moins une caméra (6), du véhicule à moteur (1) sont analysées en ce qui concerne des objets (17) à prendre en compte lors de la planification de la trajectoire, lesquels objets (17) peuvent être classés comme obstacle ou sans obstacle par le biais d'au moins un classificateur analysant les données de capteur associées,
**caractérisé en ce que**
dans le cas d'un objet (17) ne pouvant pas ou pas avec une certitude suffisante être classé comme obstacle ou sans obstacle et/ou dans le cas d'au moins un objet (17) empêchant la poursuite du voyage du véhicule à moteur (1) vers une destination actuelle, au moins une image de caméra (18) de l'objet (17) correspondant est enregistrée avec au moins une des au moins une caméra (6), est transférée à un dispositif de communication mobile (11) portable pouvant être porté par un utilisateur (12) du véhicule à moteur (1) et y est affichée, une entrée d'un utilisateur (12) classifiant l'objet (17) comme un obstacle ou sans obstacle est reçue comme information de classification, l'information de classification est retransférée au véhicule à moteur (1) et est prise en compte lors de la planification de la trajectoire.

2. Procédé selon la revendication 1,
**caractérisé en ce qu'**
un téléphone portable est utilisé comme dispositif de communication mobile (11).

3. Procédé selon la revendication 1 ou 2,
**caractérisé en ce que**
la transmission de l'image de caméra (18) et de l'information de classification se fait par le biais d'un dispositif de serveur fixe et externe au véhicule (7).

4. Procédé selon la revendication 3,
**caractérisé en ce que**
des données cartographiques numériques décrivant la plage dans laquelle se déplace le véhicule à moteur (1) sont stockées sur le dispositif de serveur (7), dans lequel les objets (17) classés par un utilisateur (12) sont stockés dans les données cartographiques avec les informations de classification associées.

5. Procédé selon la revendication 4,
**caractérisé en ce que**
les informations de classification de plusieurs utilisateurs (12) pour le même objet (17) sont analysées statistiquement en vue d'une information de classification globale (23).

6. Procédé selon la revendication 4 ou 5,
**caractérisé en ce que**
les données cartographiques numériques sont transférées du dispositif de serveur (7) au véhicule à moteur (1) et prises en compte lors du pilotage automatique du véhicule à moteur (1).

7. Procédé selon l'une quelconque des revendications précédentes, **caractérisé en ce que**
la transmission de l'image de caméra (18) et de l'information de classification se fait au moins partiellement via
- un réseau radio mobile ou
- un WLAN ou
- un réseau radio mobile et un WLAN.

8. Procédé selon l'une quelconque des revendications précédentes,
**caractérisé en ce qu'**
au moins une information complémentaire (20) sur l'objet à classifier (17) est affichée sur le dispositif de communication mobile (11).

9. Procédé selon la revendication 8,
**caractérisé en ce qu'**
une carte (19) de l'environnement actuel du véhicule à moteur (1) est utilisée comme information supplémentaire (20), dans lequel, sur la carte (19), l'emplacement
- de l'objet à classifier (17) ou
- d'autres objets déjà classifiés ou
- du véhicule à moteur (1) ou
- de l'objet à classifier (17) et d'autres objets déjà classifiés ou
- de l'objet à classifier (17) et du véhicule à moteur (1) ou
- d'autres objets déjà classifiés et du véhicule à moteur (1) ou
- de l'objet à classifier (17) et d'autres objets déjà classifiés et du véhicule à moteur (1)
est représenté.

10. Procédé selon la revendication 8 ou 9,
**caractérisé en ce que**
les dimensions de l'objet (17) déterminées par les capteurs d'environnement comme information supplémentaire (20) sont utilisées.

11. Procédé selon l'une quelconque des revendications précédentes,
**caractérisé en ce que**
l'image de caméra (18) est retravaillée avant l'affichage pour une meilleure lisibilité.

12. Procédé selon l'une quelconque des revendications précédentes,
**caractérisé en ce qu'**
une application logicielle (13) est utilisée pour réaliser les étapes devant être effectuées du côté du dispositif de communication mobile (11).

13. Procédé selon l'une quelconque des revendications précédentes,
**caractérisé en ce que**
des caméras (6) couvrant l'environnement du véhicule à moteur (1) dans toute la plage angulaire sont utilisées.

14. Système de surveillance, présentant un véhicule à moteur (1) à pilotage automatique, qui est réalisé comme voiture particulière, avec des capteurs d'environnement, comprenant au moins une caméra (6), dont les données de capteur enregistrées peuvent être analysées du côté d'une unité de commande (4) en ce qui concerne des objets (17) à prendre en compte lors de la planification de la trajectoire, lesquels objets (17) peuvent être classifiés comme obstacle ou sans obstacle par le biais d'au moins un classificateur analysant les données de capteur associées, et un dispositif de communication mobile (11), réalisé pour exécuter un procédé selon l'une quelconque des revendications précédentes.
